# DEMANDE DE BREVET EUROPEEN

(11) **EP 1 967 673 A1**
(43) Date de publication de la demande: **10.09.2008**
(21) Numéro de dépôt: 08003447.3
(22) Date de dépôt: 26.02.2008
(51) Int. Cl.: E04H 4/08, E04H 4/14, B29C 70/30, B29C 70/84

(54) **Procédé et outillage pour le moulage d'une piscine obtenue**

(30) Priorité: 05.03.2007 FR 0701574
(71) Demandeur: Art Piscine Polyester, 04130 Volx (FR)
(72) Inventeur: Lodico, Antoine, 13840 Rognes (FR)
(74) Mandataire: Pouillot, Laurent Pierre Paul

(57) **Abrégé**

L'invention concerne une coque de piscine qui comporte une première partie de coque en matière plastique renforcée et une seconde partie de coque en matière plastique renforcée ; l'épaisseur moyenne (42) de la première partie est supérieure à l'épaisseur moyenne (43) de la seconde partie, la première partie prolongeant la seconde partie le long d'une zone (41) de jonction s'étendant sur une partie sub5tanticlle du contour, en vue en plan, de la seconde partie.

## Description

La présente invention est relative à un procédé de fabrication d'une coque de piscine par moulage, à un outillage pour le moulage d'une telle coque, et aux coques de piscines ainsi obtenues.

L'invention s'applique notamment aux coques de piscine comportant un compartiment destiné à recevoir un « volet roulant » servant à couvrir la piscine.

L'invention s'applique en particulier aux coques de piscine en matière plastique renforcée fabriquées par moulage.

La fabrication d'une telle coque de piscine -ou piscine - comporte habituellement les étapes successives suivantes :
- on applique sur un moule correspondant à la forme de bassin à obtenir, un enduit gélifié (« gel coat ») qui formera la couche (interne) de finition ;
- on applique ensuite au moins une couche (et généralement plusieurs couches) d'une résine polyester imprégnant des renforts sous forme de fils coupés, de tissus, ou de non tissés (mat) ;
- on met ensuite généralement en place des renforts (en carton par exemple) que l'on recouvre d'un mélange de résine et de fibres, par projection par exemple, en même temps que l'ensemble de la coque préformée.

Après solidification de la résine, on peut démouler la coque et procéder aux opérations de finition.

Lorsque l'on désire recouvrir une piscine de lames flottantes d'un « volet roulant », il est intéressant que ce volet soit logé dans un compartiment enterré jouxtant un bord de la piscine et communiquant avec le bassin délimité par la coque de la piscine.

La fabrication d'une coque de piscine intégrant un tel compartiment nécessiterait l'usage d'un moule différent de celui nécessaire à la fabrication d'une coque de piscine de même forme, mais dénuée de ce compartiment.

En tout état de cause, la fabrication en matière plastique renforcée d'une coque de piscine intégrant un compartiment destiné à recevoir un volet roulant, se heurte à de nombreuses difficultés ; il est notamment très difficile (sinon impossible) de démouler une telle coque, sans détériorer la coque et/ou le moule, en raison notamment des grandes dimensions de cette coque et du compartiment de logement du volet, ainsi que de l'adhérence importante de la coque sur le moule -malgré un cirage préalable du moule-.

Il en résulte que les piscines équipées d'un compartiment recevant un volet roulant comportent deux coques séparées qui sont assemblées mécaniquement sur le site d'implantation de la piscine ; un joint/raccord d'étanchéité est ensuite réalisé à la jonction entre la coque du bassin principal et la coque du compartiment recevant le volet.

Ceci présent l'inconvénient que, les deux coques étant soumises à des contraintes mécaniques, hydrauliques, et/ou thermiques différentes, les coques peuvent se déplacer mutuellement et la jonction étanche entre les coques n'est alors plus assurée.

Un objectif de l'invention est de remédier à ces problèmes.

Un objectif de l'invention est de proposer une coque de piscine en matière plastique renforcée, un outillage et un procédé pour la fabrication de telles coques, qui soit amélioré(e) et/ou qui remédie, en partie au moins, aux lacunes ou inconvénients des coques de piscine, respectivement des outillages et procédés de fabrication de ces coques, qui sont connus.

Selon un aspect de l'invention, il est proposé une coque de piscine qui comporte une première partie de coque en matière plastique renforcée et une seconde partie de coque en matière plastique renforcée, l'épaisseur moyenne de la première partie étant supérieure à l'épaisseur moyenne de la seconde partie, la première partie prolongeant la seconde partie le long d'une zone de jonction s'étendant sur une partie substantielle -par exemple voisine du quart- du contour, en vue en plan, de la seconde partie.

Généralement, l'aire - en vue en plan - et la masse de la seconde partie de coque est supérieure à l'aire (respectivement la masse) de la première partie de coque.

Selon un mode de réalisation, la première partie de coque forme un compartiment agencé pour recevoir un système de couverture du plan d'eau de la piscine tel qu'un volet roulant « immergé » à lames flottantes.

Selon un mode de réalisation, la première partie de coque forme un escalier d'accès à la partie principale du bassin délimitée par la seconde partie de coque.

Selon un mode de réalisation, la première partie de coque prolonge la seconde partie de coque le long d'une partie rectiligne du contour, en vue en plan, de la seconde partie de coque.

Selon un mode de réalisation, la première partie de coque prolonge la seconde partie de coque le long d'une partie curviligne du contour, en vue en plan, de la seconde partie de coque.

Selon un mode de réalisation, la première partie de coque prolonge la seconde partie de coque le long d'une partie rectiligne du contour et le long d'une partie curviligne du contour prolongeant la partie rectiligne du contour, en vue en plan, de la seconde partie de coque.

Selon un autre aspect de l'invention, il est proposé un outillage de moulage d'une coque de piscine en matière plastique qui comporte un premier moule et un second moule dont une partie présente une forme adaptée à (complémentaire de) la forme d'une partie du premier moule, le premier moule étant adapté pour former une ébauche d'une première partie de la coque prolongeant une seconde partie de la coque formée sur le second moule, l'outillage étant dénué de moyens de liaison mécanique pour relier les deux moules qui sont utilisés successivement pour fabriquer la coque.

Les moules peuvent être fabriqués en matière plastique renforcée.

Selon un autre aspect de l'invention, on forme une préforme d'une première partie seulement de la coque en utilisant un premier moule ; on solidarise ensuite la préforme obtenue à un second moule ; puis on moule la coque en recouvrant une partie au moins de la préforme, avant de séparer la coque intégrant la préforme du second moule.

L'invention permet de fabriquer à moindre coût une coque monobloc intégrant une partie principale/centrale délimitant un bassin, et une partie accessoire, latérale ou périphérique, formant un escalier et/ou un compartiment arrangé pour recevoir un accessoire « immergé » volumineux tel qu'un volet roulant ».

D'autres aspects, caractéristiques, et avantages de l'invention apparaissent dans la description suivante, qui se réfère aux dessins annexés et qui illustre, sans aucun caractère limitatif, des modes préférés de réalisation de l'invention.

Les figures 1 à 8 sont des vues en plan schématiques de coques et d'outillages à différents stades d'un procédé de fabrication conforme à l'invention, tandis que les figures 9 à 15 sont des vues de côté schématiques de coques et outillages à différents stades d'un procédé selon l'invention.
La figure 1 illustre une coque comportant une partie formant bassin et une autre partie délimitant un compartiment destiné à recevoir un volet roulant en partie recouvert d'eau, ces deux parties étant dans le prolongement l'une de l'autre, le bassin et le compartiment étant communicants.
La figure 2 illustre les deux moules respectivement utilisés pour fabriquer les deux parties de la coque de la figure 1.
La figure 3 illustre une préforme moulée sur le premier moule de la figure 2.
La figure 4 illustre le second moule ainsi que la préforme de la figure 3 (après son démoulage).
La figure 5 illustre la mise en contact intime de la préforme et du moule illustrés figure 4.
La figure 6 illustre la coque obtenue par surmoulage de la préforme des figures 3 à 5, avant démoulage de la seconde partie de coque délimitant le compartiment/bassin principal de la piscine.
Les figures 7, 14 et 15 illustrent chacune une variante de la coque de la figure 1, qui comporte un escalier comportant des marches d'accès au compartiment délimitant un bassin principal/central de la piscine.
Les figures 8 et 9 illustrent chacune les trois moules utilisés pour fabriquer la coque des figures 7, 14, 15.
La figure 10 illustre deux préformes respectivement formées sur deux des trois moules des figures 8 et 9.
La figure 11 illustre les deux préformeq de la figure 10 après démoulage, ainsi que le troisième moule, avant leur solidarisation mutuelle deux à deux.
La figure 12 illustre les deux préformes latérales de la figure 11 solidarisées au moule central de la figure 11.
La figure 13 illustre la coque obtenue par moulage sur le moule central des figures 8, 9, 11, 12 et sur les deux préformes des figures 10 à 12, avant l'extraction du moule central.
Les figures 14 et 15 illustrent chacune la coque de la figure 13 après démoulage, la figure 15 illustrant le contour de la coque en vue en coupe, sans illustrer les deux préformes intégrées à l'épaisseur de la coque dans ses deux parties d'extrémité.
La figure 16 illustre schématiquement en vue en coupe, à échelle agrandie, la structure de la coque à une jonction avec une préforme intégrée à la coque.

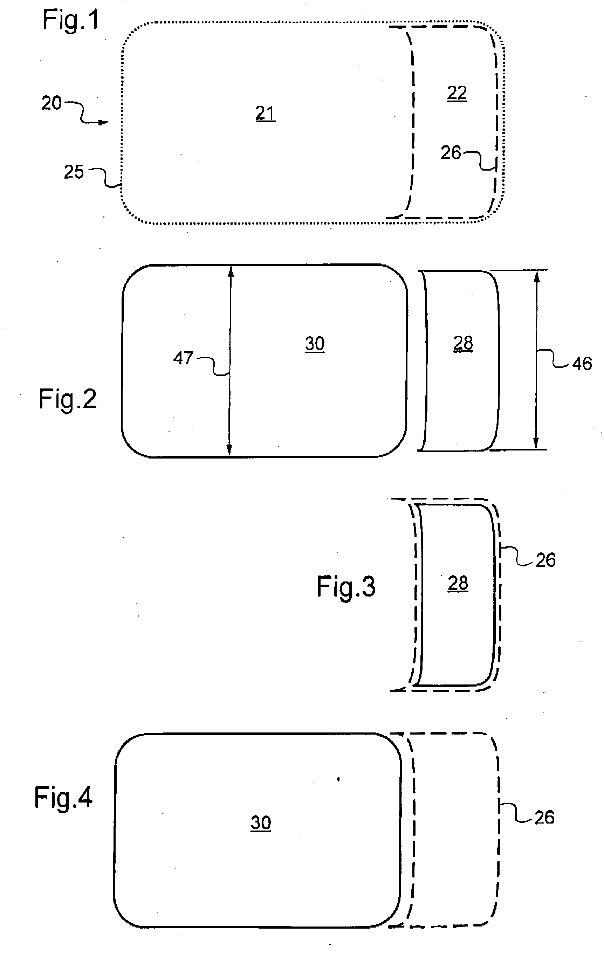

Sur les figures 1 à 15, le contour de chaque moule est représenté en trait plain, le contour de chaque préforme est représenté en trait interrompu, et le contour de la coque, finie est représenté en trait pointillé.

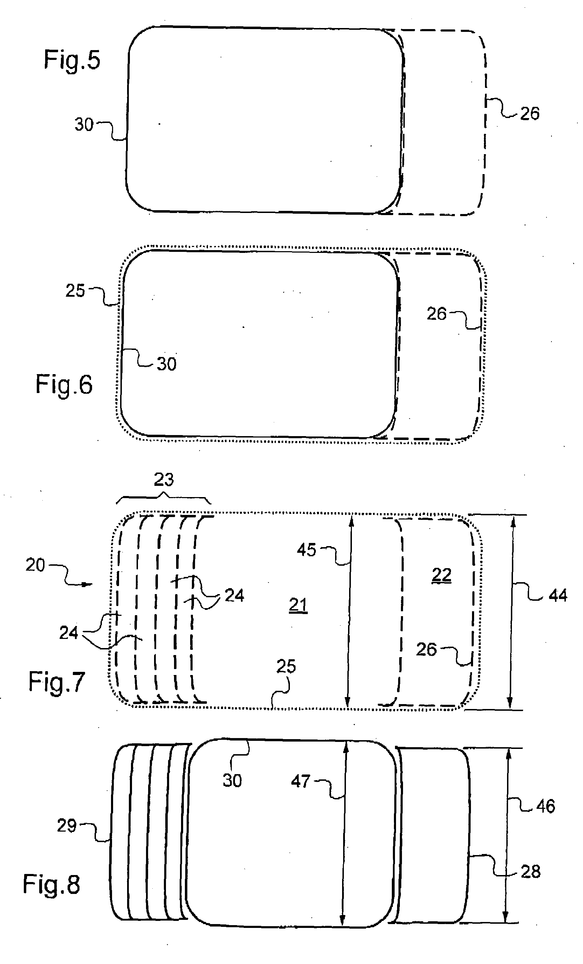

Par référence aux figures 1 et 7, la coque 20 de piscine à réaliser comporte un compartiment principal 21 de contour -en plan- de forme rectangulaire dont les angles sont arrondis, ainsi qu'un compartiment secondaire 22 dont le contour -en plan - s'inscrit dans un rectangle et épouse une partie du contour du compartiment principal-.

La coque 20 illustrée figures 7, 14 et 15 comporte en outre un compartiment 23 dont la paroi de fond forme des marches 24 d'escalier pour l'accès au compartiment central 21.

Les compartiments 22, 23, et les parois qui les délimitent, s'étendent respectivement dans le prolongement du compartiment central 21 et dans le prolongement des parois de ce compartiment 21.

Par référence aux figures 1, 7 et 14 notamment, la paroi 25 de la coque 20 de piscine comporte une partie surmoulée sur une ébauche ou préforme 26, 27 dont les parois délimitent respectivement le compartiment 22, 23.

La préforme 26 est fabriquée par moulage sur le moule 28 figures 2, 3, 8, 9, 10 et la préforme 27 est fabriquée par moulage sur le moule 29 figures 8 à 10.

La partie centrale de la paroi 25 de la coque 20 est ensuite fabriquée par moulage sur le moule 30 figures 2, 4 à 6, 8, 9, 11 à 13.

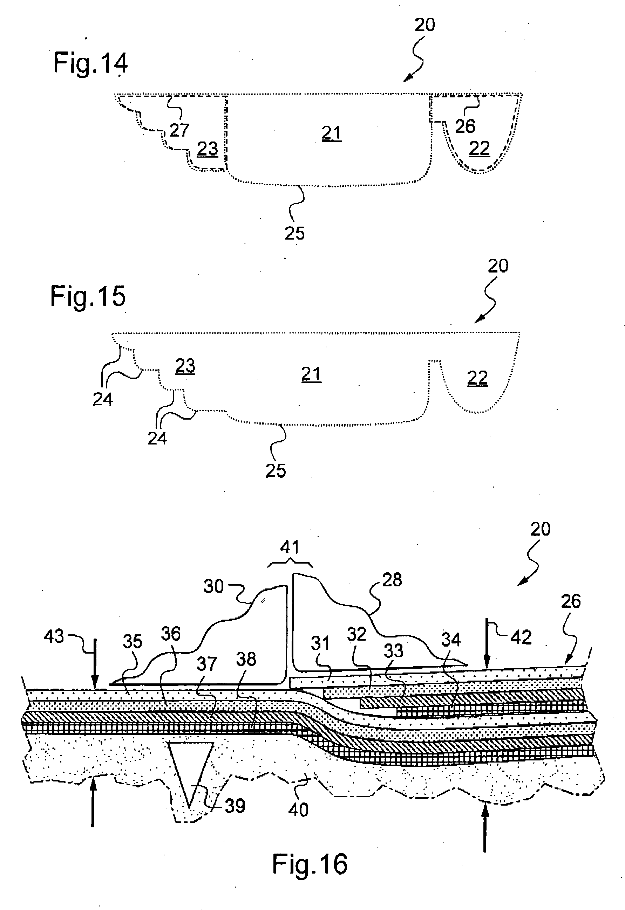

La fabrication de la coque illustrée figure 1 comporte les opérations successives suivantes :
- moulage de l'ébauche 26 de la partie de la coque destinée à recevoir le volet roulant, sur le moule 28 (figure 3) ;
- démoulage de l'ébauche 26 et mise en place de cette ébauche contre le moule 30 (figures 4 et 5) ;
- moulage (figure 6) de la paroi 25 sur le moule 30, incluant un surmoulage d'au moins une partie de l'ébauche 26 par cette paroi 25 ; il en résulte que la partie surmoulée de l'ébauche présente une épaisseur supérieure à celle de la partie de la paroi 25 délimitant le compartiment central 21, comme décrit plus en détail ci-après en relation avec la figure 16 ;
- démoulage de la coque par séparation de la paroi 25 et du moule 30 pour aboutir à la coque 20 de la figure 1.

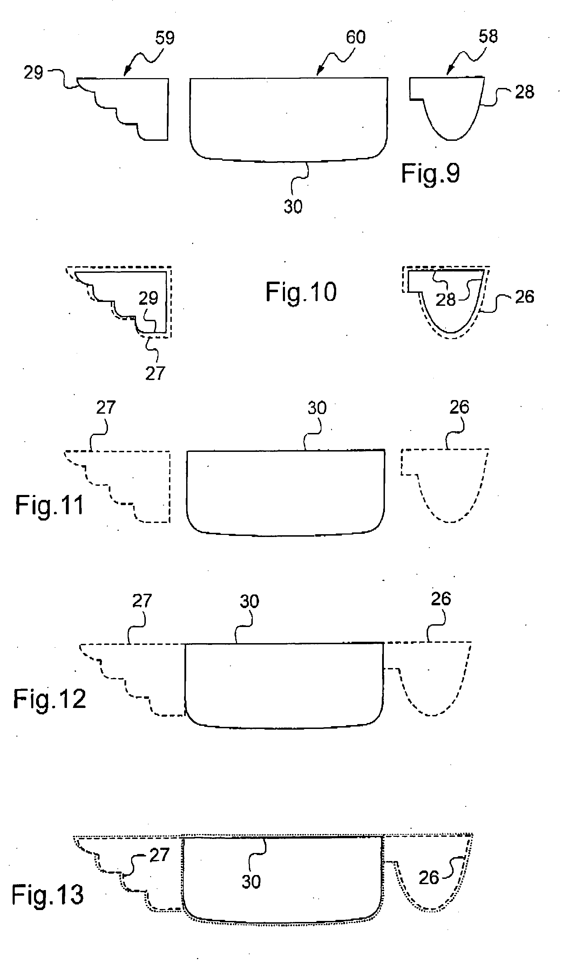

Le même procédé est appliqué pour la fabrication de la coque 20 illustrée figures 7, 14 et 15 ; cependant, dans ce cas, deux moules 28, 29 complémentaires du moule 30 de la partie centrale 21 de la coque 20 sont alors utilisés, qui sont représentés figures 8 et 9.

La fabrication comporte les opérations de moulage des ébauches 26, 27 sur leur moule respectif 28, 29 (figure 10), démoulage des ébauches 26, 27 (figure 11), solidarisation et/ou positionnement en contact intime des ébauches 26, 27 et du moule 30 de la partie centrale (figure 12), surmoulage total ou partiel des ébauches 26, 27 lors du moulage de la partie centrale de la coque 25 sur le moule 30 (figure 13), démoulage (figure 14).

Par référence à la figure 16 en particulier, l'ébauche 26 peut être obtenue par dépôts successifs sur le moule 28 d'une couche 31 d'un enduit gélifié, d'une couche 32 d'une première résine dénuée de renforts, d'une couche 33 d'une seconde résine imprégnant un renfort tel qu'un tissu de fibres de verre par exemple, et d'au moins une autre couche 34 de résine renforcée de fibres.

Après solidification de la préforme ainsi obtenue, la séparation de la préforme et du moule 28, et l'accolement de la préforme 26 au moule 30 de la partie centrale, on peut déposer sur le moule 30 et au moins sur la partie de l'ébauche 26 qui jouxte le moule 30, des couches successives 35 à 38 dont la fonction, la nature et l'épaisseur peuvent être respectivement identiques ou similaires aux couches 31 à 34 de l'ébauche 26.

Ainsi, la paroi de la première partie de la coque comporte un empilement comportant successivement une couche 31 d'un enduit gélifié, une couche 32 d'une résine dénuée de renforts, au moins une couche 33, 34 d'une résine renforcée de fibres, une couche 35 d'un enduit gélifié, une couche 36 d'une résine dénuée de renforts, au moins une couche 37, 38 d'une résine renforcée de fibres.

On peut ensuite projeter sur la couche 38, après mise en place de corps creux de renfort tel que celui repéré 39, un mélange de résine et de fibres de renfort qui forment une couche externe 40.

La coque finie 20 présente ainsi une épaisseur différente de part et d'autre de la zone 41 de jonction entre l'ébauche 26 et le moule 30: l'épaisseur moyenne 42 de la partie de coque surmoulée sur l'ébauche 26 est supérieure à l'épaisseur moyenne 43 de la partie de la coque qui a été directement moulée sur le moule 30.

Lorsque la largeur 44 de la partie 22 de la coque surmoulée sur la préforme 26 est égale à la largeur 45 de la partie centrale de la même coque (figure 7 notamment), la largeur 46 du moule 28 servant à la fabrication de la préforme 26 est inférieure à la largeur 47 du moule 30 servant au moulage de la partie centrale de la coque (figure 2 et 8).

L'épaisseur moyenne 43 de la paroi de la partie centrale 21 de la coque est de préférence située dans une plage allant de 4 millimètres (mm) environ à 10 mm environ et l'épaisseur moyenne 42 de la paroi de la (des) pattie(s) périphériques 22, 23 de la coque est de préférence située dans une plage allant de 8 mm environ à 20 mm environ.

En pratique, pour les opérations de moulage, les moules peuvent être utilisés dans une position retournée, inverse de celle illustrée figure 9, chaque moule reposant par sa base 58, 59, 60 sur le sol ou sur un support approprié.

## Revendications

1. Coque (20) de piscine qui comporte une première partie (22, 23) de coque en matière plastique renforcée et une seconde partie (21) de coque en matière plastique renforcée, **caractérisée en ce que** l'épaisseur moyenne (42) de la première partie est supérieure à l'épaisseur moyenne (43) de la seconde partie, et **en ce que** la première partie prolonge la seconde partie le long d'une zone (41) de jonction s'étendant sur une partie substantielle -par exemple voisine du quart- du contour, en vue en plan, de la seconde partie.

2. Coque selon la revendication 1 dans laquelle l'aire - en vue en plan - et la masse de la seconde partie de coque est supérieure à l'aire (respectivement la masse) de la première partie de coque.

3. Coque selon l'une quelconque des revendications 1 ou 2, dans laquelle la première partie de coque forme un compartiment (22) agencé pour recevoir un système de couverture du plan d'eau de la piscine.

4. Coque selon l'une quelconque des revendications 1 à 3, dans laquelle la première patrie de coque forme un escalier (23, 24) d'accès à la partie principale du bassin délimitée par la seconde partie de coque.

5. Coque selon l'une quelconque des revendications 1 à 4, dans laquelle la première partie de coque prolonge la seconde partie de coque le long d'une partie rectiligne du contour, en vue en plan, de la seconde partie de coque.

6. Coque selon l'une quelconque des revendications 1 à 5, dans laquelle la première partie de coque prolonge la seconde partie de coque le long d'une partie curviligne du contour, en vue en plan, de la seconde partie de coque.

7. Coque selon l'une quelconque des revendications 1 à 6, dans laquelle l'épaisseur moyenne (43) de la paroi de la partie centrale (21) de la coque est située dans une plage allant de 4 millimètres (mm) environ à 10 mm environ et l'épaisseur moyenne (42) de la paroi de la (des) partic(s) périphériques (22, 23) de la coque est située dans une plage allant de 8 mm environ à 20 mm environ.

8. Coque selon l'une quelconque des revendications 1 à 7, dans laquelle la paroi de la première partie de la coque comporte un empilement comportant successivement une couche (31) d'un enduit gélifié, une couche (32) d'une résine dénuée de renforts, au moins une couche (33, 34) d'une résine renforcée de fibres, une couche (35) d'un enduit gélifié, une couche (36) d'une résine dénuée de renforts, au moins une couche (37, 38) d'une résine renforcée de fibres.

9. Outillage de moulage d'une coque (20) de piscine en matière plastique, en particulier une coque selon l'une quelconque des revendications 1 à 8, l'outillage étant **caractérisé en ce qu'**il comporte un premier moule (28, 29) et un second moule (30) dont une partie présente une forme adaptée à (complémentaire de) la forme d'une partie du premier moule, le premier moule étant adapté pour former une ébauche (26, 27) d'une première partie (22, 23) de la coque prolongeant une seconde partie (21) de la coque formée sur le second moule, l'outillage étant dénué de moyens de liaison mécanique pour relier les deux moules qui sont utilisés successivement pour fabriquer la coque.

10. Procédé de fabrication d'une coque (20) de piscine en matière plastique, en particulier une coque selon l'une quelconque des revendications 1 à 8, le procédé étant **caractérisé en ce que** l'on forme une préforme (26, 27) d'une première partie (22, 23) seulement de la coque en utilisant un premier moule (28, 29), on solidarise ensuite la préforme obtenue à un second moule (30) puis on moule la coque en recouvrant une partie au moins de la préforme, avant de séparer la coque intégrant la préforme du second moule.

11. Procédé selon la revendication 10 dans lequel, après solidification de la préforme obtenue, séparation de la préforme et du premier moule (28, 29) et accolement de la préforme (26, 27) au second moule (30), on dépose sur le second moule (30) er sur au moins sur la partie de l'ébauche (26, 27) qui jouxte le second moule (30), des couches successives (35 à 38) dont la fonction, la nature et l'épaisseur sont respectivement identiques ou similaires aux couches (31 à 34) de l'ébauche (26, 27), puis on projette ensuite, après mise en place de corps creux de renfort (39), un mélange de résine et de fibres de renfort qui forment une couche externe (40).
